# EUROPEAN PATENT APPLICATION

(11) **EP 3 089 513 A1**
(43) Date of publication of application: **02.11.2016**
(21) Application number: 15305654.4
(22) Date of filing: 29.04.2015
(51) Int. Cl.: H04W 36/00, H04W 64/00

(54) **PROVIDING INFORMATION RELATED TO AN ESTABLISHMENT OF AN ASSOCIATION BETWEEN ONE OR MORE BASE STATION TRANSCEIVERS AND A MOBILE TRANSCEIVER IN A MOBILE COMMUNICATION SYSTEM**

(71) Applicant: ALCATEL LUCENT, 92100 Boulogne-Billancourt (FR)
(72) Inventor: Karla, Ingo, 46514 Schermbeck (DE)
(74) Representative: 2SPL Patentanwälte PartG mbB

(57) **Abstract**

Embodiments relate to apparatuses (10; 20), methods and computer programs for providing information related to an establishment of an association between one or more base station transceivers (100a; 100b) and a mobile transceiver (200) in a mobile communication system (300). The apparatus (10) comprises at least one interface (12) to communicate within the mobile communication system (300). The apparatus (10) further comprises a control module (14) to obtain information related to a mobility of the mobile transceiver (200) and to determine information related to a predicted channel condition based on the information related to the mobility of the mobile transceiver (200). The control module (14) is further configured to determine the information related to the establishment of the association between the one or more base station transceivers (100a; 100b) and the mobile transceiver (200) based on the information related to the predicted channel condition. The control module (14) is further configured to provide the information related to the establishment of the association between the one or more base station transceivers (100a; 100b) and the mobile transceiver (200).

## Description

### Technical Field

Embodiments relate to apparatuses, methods and computer programs for providing information related to an establishment of an association between one or more base station transceivers and a mobile transceiver in a mobile communication system, more specifically, but not exclusively, based on information related to a predicted channel state.

### Background

This section introduces aspects that may be helpful in facilitating a better understanding of the invention(s). Accordingly, the statements of this section are to be read in this light and are not to be understood as admissions about what is in the prior art or what is not in the prior art.

Communication in higher frequency ranges than used by today's classical wireless systems, like 11-300GHz with so-called mm-Waves, may face the challenge to exploit Line-Of-Sight (LOS), Non LOS (NLOS), or reflected paths for e.g. small cell backhaul or access applications which may use high gain antennas with steerable beams to overcome the high path loss. Due to the specific mm-wave propagation properties the channel may often consist only of one or two spatially separated paths, and a connection between a transmitter and a receiver may only be established when pointing a main lobe of an antenna pattern or beam of a high gain and narrow Half Power Beam Width (HPBW), for example using an antenna array, into the direction of the signal. However, the direction of the strongest path might not be known and a beam might not be steered initially into the right direction.

In some cases, the communication may be entirely based on Line-Of-Sight connections between a base station transceiver and a mobile transceiver. As objects may pass within the line of sight, or the position of the mobile transceiver may change such that the Line-of-Sight is blocked, the connection between the base station transceiver and the mobile transceiver may drop.

### Summary of illustrative Embodiments

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Various embodiments provide apparatuses, methods and computer programs for providing information related to an establishment of an association between one or more base station transceivers and a mobile transceiver in a mobile communication system. As high-frequency mobile communication systems, such as e.g. millimeter wave-based mobile communication systems, have to deal with high path loss and signal attenuation and may face significant signal deterioration from reflections and obstacles, such mobile communication systems might only be used with Line-Of-Sight (LOS) signal propagation or signal propagation with few obstacles. This may lead to a requirement for frequent handovers to maintain a connection, which may lead to interruptions of data and/or voice transmissions. Embodiments may provide information related to an establishment of an association between one or more base station transceivers and a mobile transceiver in such a mobile communication system, which may facilitate or enable a handover with reduced interruptions. Embodiments may determine a predicted channel condition, e.g. based on an analysis of previous channel states at a location, and may initiate handover based on the predicted channel state, which may be based on a location and/or a trajectory of the mobile transceiver. To reduce interruptions, the mobile transceiver may maintain an association with a current base station transceiver until a subsequent associations has been established and may switch over then.

Embodiments provide an apparatus suitable for providing information related to an establishment of an association between one or more base station transceivers and a mobile transceiver in a mobile communication system. The apparatus comprises at least one interface to communicate within the mobile communication system. The apparatus further comprises a control module to obtain information related to a mobility of the mobile transceiver and determine information related to a predicted channel condition based on the information related to the mobility of the mobile transceiver. The apparatus is further configured to determine the information related to the establishment of the association between the one or more base station transceivers and the mobile transceiver based on the information related to the predicted channel condition, and to provide the information related to the establishment of the association between the one or more base station transceivers and the mobile transceiver. Embodiments may decrease service interruptions in high-frequency mobile communication systems by predicting a future channel condition based on a mobility, e.g. a location or trajectory, of a mobile transceiver and providing information related to an establishment of an association between one or more base station transceivers and a mobile transceiver, so the mobile transceiver may be associated with a base station transceiver with advantageous properties. The predicted channel condition may be used to perform a handover before a connection is lost or deteriorated below a threshold.

In at least some embodiments, the control module may be configured to change the association of the mobile transceiver from a first base station transceiver configured to operate in the mobile communication system to a second base station transceiver configured to operate in the same or another mobile communication system. Embodiments may effect a change of the association of the mobile transceiver to a base station transceiver with advantageous properties based on the mobility of the mobile transceiver, e.g. to account for locations where a radio signal of the first base station transceiver is shadowed or deteriorated.

In various embodiments, at least one of the one or more base station transceivers may be configured to operate in a millimeter wave band. Using embodiments with base station transceivers operating in a millimeter wave band may reduce an interruption and/or time required for handover of the mobile transceiver.

In at least some embodiments, the information related to the mobility of the mobile transceiver may comprise information related to a position of the mobile transceiver. The control module may be configured to determine the information related to the establishment of the association between the one of the one or more base station transceiver and the mobile transceiver based on the information related to the position of the mobile transceiver and information related to a position of the one or more base station transceivers of the mobile communication system. Embodiments may decrease service interruptions in high-frequency mobile communication systems by predicting a future channel condition based on a mobility, e.g. a location or trajectory, of a mobile transceiver and providing information related to an establishment of an association between one or more base station transceivers and a mobile transceiver, so the mobile transceiver may be associated with a base station transceiver with advantageous properties.

In various embodiments, the information related to the mobility may further comprise information related to at least one element of the group of a trajectory of the mobile transceiver, a velocity of the mobile transceiver, and a cell association of the mobile transceiver. Embodiments may decrease service interruptions in high-frequency mobile communication systems by predicting a future channel condition based on a mobility, e.g. a location or trajectory, of a mobile transceiver and providing information related to an establishment of an association between one or more base station transceivers and a mobile transceiver, so the mobile transceiver may be associated with a base station transceiver with advantageous properties.

In at least some embodiments, the apparatus may further comprise a storage module. The storage module may be configured to store the information related to the position of the one or more base station transceivers. Storing the information related to the position of the one or more base station transceiver may make the information related to the position of the one or more base station transceiver available for data analysis or determination of the information related to the association of the one or more base station transceivers and the mobile transceiver.

In at least some embodiments, the control module may be configured to obtain information related to a channel state between the one or more base station transceivers and a plurality of mobile transceivers as information related to a previous channel state. The control module may be further configured to obtain information related to a plurality of locations of the plurality of mobile transceivers and to store the information related to the previous channel state together with the information related to the plurality of locations of the plurality of mobile transceivers using the storage module. The control module may be further configured to determine the information related to the predicted channel condition based on the stored information related to the previous channel state, the stored information related to the plurality of locations of the plurality of mobile transceivers and the information related to the position of the one or more base station transceivers. Using the information related to the previous channel state to determine the information related to the predicted channel condition may enable a self-learning prediction and may avoid dedicated mapping and channel measurement of an area in vicinity of the one or more base station transceivers.

In various embodiments, the control module may be configured to statistically determine the information related to the predicted channel condition based on a statistical analysis of the stored information related to the previous channel state, the information related to the plurality of locations and the information related to the one or more base station transceivers. Using a statistical analysis of the information related to the previous channel state to determine the information related to the predicted channel condition may enable a self-learning prediction and may avoid dedicated mapping and channel measurement of an area in vicinity of the one or more base station transceivers.

In at least some embodiments, the control module may be configured to obtain information related to a service traffic behavior of the mobile transceiver. The control module may be further configured to determine the information related to the establishment of the association between the one or more base station transceivers and the mobile transceiver based on the information related to the service traffic behavior. Using the information related to the service traffic behavior may enable an association of a mobile transceiver based on its traffic profile, to differentiate mobile transceivers that require a high throughput and mobile transceivers which may prefer a stable connection and/or little handover overhead.

In various embodiments, the control module may be configured to determine information related to a discovery beam for at least one of the one or more base station transceivers. The information related to the discovery beam may be comprised in the information related to the establishment of the association between the one or more base station transceivers and the mobile transceiver. The information related to the discovery beam may comprise information related to a beam width and/or information related to a beam direction. Providing the information related to the discovery beam to a mobile transceiver may enable the mobile transceiver to reduce a time required to discover a base station transceiver and/or to associate with the mobile transceiver.

In at least some embodiments, the control module may be further configured to provide handover control information based on the information related to the predicted channel condition. The handover control information may be used to control a handover of the mobile transceiver between base station transceivers, which may decrease service interruptions in high-frequency mobile communication systems by predicting a future channel condition based on a mobility, e.g. a location or trajectory, of a mobile transceiver and providing the control information, so the mobile transceiver may perform a handover with a base station transceiver with advantageous properties. The predicted channel condition may be used to determine the handover control information to enable a handover before a connection is lost or deteriorated below a threshold.

In various embodiments, the one or more base station transceivers may comprise at least two base station transceivers. The control module may be configured to provide the handover control information to control an establishment of a subsequent association between one base station transceiver of the one or more base station transceivers and the mobile transceiver and to subsequently control a termination of a current association between another base station transceiver of the one or more base station transceivers and the mobile transceiver to effect a seamless transition from the current association to the subsequent association. A termination of the current association after the subsequent association has been established may provide a seamless transition and/or reduce service interruptions during the handover.

Embodiments further provide an apparatus for a mobile transceiver in a mobile communication system. The mobile communication system further comprises two or more base station transceivers. The apparatus comprises at least one transceiver module to communicate with the mobile communication system. The at least one transceiver module is configured to communicate with at least two of the two or more base station transceivers at the same time. The apparatus further comprises a control module to obtain information related to an establishment of an association between the one or more base station transceivers and the mobile transceiver. The control module is further configured to establish at least one association between the mobile transceiver and at least one of the two or more base station transceivers based on the information related to the establishment of the association, without performing handover measurements on radio signals of the at least one of the two or more base station transceivers within a predetermined time interval prior to establishing the at least one association. The apparatus may use the information related to the establishment of the association to establish at least one association without being required to perform handover measurement first, which may decrease a time required for an association and may leverage information related to a predicted channel state to establish an association with a base station transceiver with advantageous properties, and may enable an association of a mobile transceiver with a base station transceiver accessible via a directed beam.

In at least some embodiments, the mobile transceiver may be associated with at least one base station transceiver of the two or more base station transceivers using a current association. The control module may be further configured to obtain handover control information. The control module may be further configured to establish a subsequent association based on the information related to the establishment of the association. The control module may be further configured to maintain the current association until the subsequent association is established and to switch over to the subsequent association based on the handover control information. Maintaining the current association until the subsequent association has been established may provide a seamless transition and/or reduce service interruptions during the handover.

Embodiments further provide a method suitable for providing information related to an establishment of an association between one or more base station transceivers and a mobile transceiver in a mobile communication system. The method comprises communicating within the mobile communication system. The method further comprises obtaining information related to a mobility of the mobile transceiver and determining information related to a predicted channel condition, based on the information related to the mobility of the mobile transceiver. The method further comprises determining the information related to the establishment of the association between the one or more base station transceivers and the mobile transceiver based on the information related to the predicted channel condition. The method further comprises providing the information related to the establishment of the association between the one or more base station transceivers and the mobile transceiver.

Embodiments further provide a method for a mobile transceiver in a mobile communication system. The mobile communication system further comprises two or more base station transceivers. The method comprises communicating with at least two of the two or more base station transceivers at the same time. The method further comprises obtaining information related to an establishment of an association between the one or more base station transceivers and the mobile transceiver. The method further comprises establishing at least one association between the mobile transceiver and at least one of the two or more base station transceivers based on the information related to the establishment of the association, without performing handover measurements on radio signals of the at least one of the two or more base station transceivers within a predetermined time interval prior to establishing the at least one association.

A further embodiment is a computer program product comprising a computer readable medium having computer readable program code embodied therein, the computer readable program code being configured to implement one of the above methods when being loaded on a computer, a processor, or a programmable hardware component.

Embodiments further provide a computer program having a program code for performing the above method, when the computer program is executed on a computer, a processor, or a programmable hardware component. A further embodiment is a computer readable storage medium storing instructions which, when executed by a computer, processor, or programmable hardware component, cause the computer to implement one of the methods described herein.

### Brief description of the figures

Some other features or aspects will be described using the following non-limiting embodiments of apparatuses or methods or computer programs or computer program products by way of example only, and with reference to the accompanying figures, in which:
- Fig. 1: illustrates a block diagram of an embodiment of an apparatus suitable for providing information related to an establishment of an association between one or more base station transceivers and a mobile transceiver in a mobile communication system;
- Fig. 2: illustrates a block diagram of an embodiment of an apparatus suitable for providing information related to an establishment of an association between one or more base station transceivers and a mobile transceiver in a mobile communication system, the apparatus further comprising a storage module;
- Fig. 3: illustrates a block diagram of an embodiment of an apparatus for a mobile transceiver;
- Fig. 4: illustrates a flow chart of an embodiment of a method suitable for providing information related to an establishment of an association between one or more base station transceivers and a mobile transceiver in a mobile communication system; and
- Fig. 5: illustrates a flow chart of an embodiment of a method for a mobile transceiver.

### Description of Embodiments

Various example embodiments will now be described more fully with reference to the accompanying drawings in which some example embodiments are illustrated. In the figures, the thicknesses of lines, layers or regions may be exaggerated for clarity. Optional components are illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Milli-Meter (mm) waves may be considered as one future approach to obtain further spectrum for wireless communication in order to meet the ever increasing bandwidth demand. mm-waves are part of the discussion and research topics for future telecommunication networks, such as for 5G mobile communication systems.

mm-waves are electromagnetic waves in the range of 30 to 300 GHz. While frequencies in this range may provide a potential for very large capacities, their physical properties may lead to large physical challenges for communication systems. Compared to the currently used sub-3GHz mobile communication frequencies, these mm-waves may have more challenging radio conditions. These challenges may include their very large free space path loss (which may rise with the square of the frequency) and large radio signal attenuations, such as by Oxygen (also in water/humidity) and by walls. Furthermore the reflection capabilities and "corner surrounding" properties might not be as good as with lower frequencies. Basically, mm-waves in communications may be suited for 1) outdoor and 2) line-of-sight, and 3) for distances shorter than a few hundreds of meters. Indoor single room coverage may be a further application.

As a result, the radio signal conditions for a mobile transceiver may change very quickly and much more unpredictably compared to wireless communication in the lower frequency ranges. The risk of mm-wave coverage outages may pose a threat.

The combination of mm-waves with Multiple Input Multiple Output (MIMO)-antenna technologies may be considered as especially beneficial. The base station MIMO-antenna may direct a narrow radio signal beam to a mobile transceiver. This may result in a spatial separation of the radio signals, a cell may cover the area not in a uniform way within its antenna angle, but in directed beams. This may require the antenna directions of the cell and the mobile terminal to be aligned towards each other, and outside of directed beams, there might not be coverage anymore.

The initial discovery of a possible mm-connection possibility between a mobile terminal and a cell may be considered challenging. There may be technical limitations which may prevent the established discovery technologies to be also applied in the mm-wave rage, as will be described below.

Furthermore, radio signal conditions at mm-wave frequencies may be unstable, quickly varying, and connection outage may quickly occur at any time. Therefore, very fast actions may be required in an outage situation, e.g. to reestablish a new connection.

When an outage occurs, there might not be time to start a time-consuming process to scan for new mm-wave connections over a wide frequency range and over a wide range of angles. Furthermore the mm-wave radio signals may quickly vary, and might not be constantly available to measure these by the mobile transceivers. Therefore, a search and discovery procedure may take too long.

In conventional systems, the cell discovery process of the mobile terminals may be comprise a base station sending out "Common Reference Signals" via which the mobiles may discover and then associate to this cell.

This approach may work fine in conventional systems within the sub 3-GHz frequencies. These systems may be interference limited, and the base station signals may be detected in a (potential) coverage area of this cell.

Conventional cell advertisement and discovery approaches might not work in the case of mm-wave communication systems, because of the following issues:

Power limitation in mm-waved of the omni-directional or wide angle cell-discovery signal: The high path loss of mm-waves (which may rises with the square of the frequency) may lead to the base station requiring a high amount of transmission power to send a signal into a certain direction of the cell. Assuming that this cell-discovery-signal is sent out in an omni-directional way (or over the whole antenna spread of the cell sector), the cell may run into power limitations. It might not be possible to employ the required power for any antenna angle simultaneously. This power problem may be a key motivation of why mm-waves may usually be associated with narrow directed MIMO beams, which may direct the antenna transmission power precisely to this mobile terminal.

As a result, a conventional cell discovery approach may lead to a smaller discoverable area in the proximity of the antenna at mm-wave frequencies, while the actual coverage area of the mm-wave cell may be considerably larger when after connection establishment directed MIMO beams are used to for the actual base station to mobile communication.

Further, it might not be feasible to scan for mm-wave signals using a conventional approach. First, a large amount of frequencies may need to be scanned: mm-waves may provide an opportunity for a large amount of useable spectrum for communications. In order to reach the planned large capacity increase, a large amount of potential cell frequencies may need to be scanned.

Second, it may be required to scan also in different angles. Directed beams may be used in combination with mm-waves, and may be possible, that also a kind of directed beam may be used for cell advertisement and discovery signals, such as in the way of e.g. a rotating ship-guiding light tower light beam, or an air-control radar beam. Whichever technique is used, the result may be that the cell-signal may be less frequent, and/or the mobile may direct its receiving antenna to scan in a directional way for the base station signal. This may require more scanning time and effort, but also depend on stable signal conditions over the long scanning procedure.

Third, unstable radio signal conditions may favor a fast discovery. Radio signals in mm-wave frequency bands may be unstable, vary more quickly and a risk of outage may be larger than in lower frequencies. Such quickly changing radio conditions may prevent to carry out a long scanning procedure (over frequencies, over angles and with potentially sparsely available signals) as it may be required by conventional approaches. The result of detecting or not detecting a potential advertised cell might be arbitrary.

Fourth, conventional approaches may comprise a high effort. In addition to the above technical problems in the mm-wave-range, the classical approaches of cell advertisement and discovery may require too much effort, too long time and might not be energy efficient.

Summarized, the conventional cell discovery approaches might not be well suited to be employed in the mm-wave range, and more sophisticated solutions may be required.

Additionally, using legacy networks as frequent intersystem-handover fallbacks may be problematic and might not be efficient. A straightforward approach might be that the mobile terminal carries out an inter-system handover to a legacy network, such as to LTE. But this intersystem handover process may take longer than the very suddenly occurring outage situation of the mm-waves, the mm-wave signal quality might not degrade slowly, the mm-wave connection may suddenly break down. As a result, an inter-system handover might not be seamless anymore (assuming conventional intersystem handover approaches).

As for moving mobile terminals, the mm-wave radio conditions may change often, a high effort for many frequent intersystem handovers may cause network overhead and lead to a less efficient network operation.

To overcome such obstacles, the mobile terminal may simultaneously establish two radio connections, one to mm-waves and one to a legacy network, such as to LTE, yet such constant permanent double connectivity might be less energy efficient. Additionally, at least some or mobile transceivers might not be capable in maintaining two radio connections simultaneously, e.g. for manufacturing cost reasons, the mobile phones may share internal hardware between radio standards, and might not support two simultaneous connections, except sensing other technologies, compressed mode etc. for example.

Embodiments may provide a more reliable and more efficient way to handle handover, advertisement and discovery in cellular networks with mm-wave frequencies.

Embodiments may predict a likely user movement and identify potential future mm-wave connectivity problems. If so, embodiments may instruct another mm-wave base station to direct its mm-wave beam towards that mobile terminal so that this terminal can discover it and can -if needed- perform quickly, or predictively in advance, a handover towards another mm-wave cell.

In embodiments, the mobile terminal may receive -either via the mm-wave connection or via a radio connection on 'lower-frequencies', such as from LTE base stations,- information related to where, how, from which direction and when precisely to scan for which potential mm-wave connectivity.

Embodiments may use available localization information of the mobile transceiver, optionally also the smartphones acceleration and movement sensors, and may analyze such mobile information and compare it with the networks obtained knowledge of potentially available mm-wave connectivity opportunities. Furthermore, the network-intelligence-entity may instruct the mm-wave antennas into which broad direction to send out their discovery-signal beam in order to point it roughly to the candidate mobile which may be going to use mm-wave connectivity.

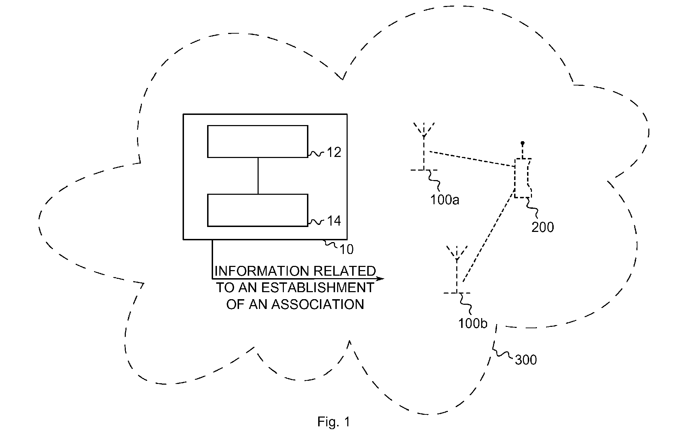

Fig. 1 illustrates a block diagram of an embodiment of an apparatus 10 suitable for providing information related to an establishment of an association between one or more base station transceivers 100a; 100b and a mobile transceiver 200 in a mobile communication system 300. The apparatus 10 comprises at least one interface 12 to communicate within the mobile communication system 300.

In various embodiments, the information related to the establishment of the association between one or more base station transceivers 100a; 100b may comprise at least one element of the group of information related to one or more discovery beams, information related to a location of the one or more base station transceivers 100a; 100b, information related to the position of the mobile transceiver 200, information related to a beam forming configuration, handover control information, and information related to suitable base station transceivers of the one or more base station transceivers 100a; 100b. The terms position and location may be used interchangeably throughout the document.

The at least one interface 12 may correspond to one or more inputs and/or outputs for receiving and/or transmitting information, which may be in digital (bit) values according to a specified code, within a module, between modules or between modules of different entities.

Embodiments may use information exchanges, between the mobile communication system 300 and the mobile transceiver 200 and between the mobile communication system and the (e.g. mm-wave-based) one or more base station transceivers. While these information exchanges might be realized in private messages, manufacturer specific implementations and possibly -in a limited way- via smartphone applications, such signaling information may be standardized, which may lead to a specification of the signaling messages and information content of the above information.

The 5G design and architecture is still under discussion, and topic of several publicly funded research projects. So far, there may be open aspects about the precise outcome of how 5G will actually look like. So currently, as many things may be under discussion, an according message exchange for embodiments may be comprised in the system design, which may lead to a standardization. A precise specification of such messages may be fixed during the standardization process, and may be based on the information exchanged by embodiments.

Such information might be exchanged - as one possible way - over existing mm-wave connections, but might also be transmitted via a legacy network, such as over LTE(-A) (Long Term Evolution Advanced). As the LTE network may provide more stable radio conditions and possibly also better coverage, the mm-wave connection discovery information might also be transmitted via this legacy network, to assist then the discovery of mm-wave connections.

In at least some embodiments, the at least one interface 12 may be configured to obtain and/or provide information using the mobile communication system 300, e.g. based on millimeter wave connections, based on lower-frequency connections, e.g. Long Term Evolution (LTE), Universal Mobile Telecommunication System (UMTS), Global System for Mobile communication (GSM), and/or based on millimeter wave and lower-frequency connections.

The apparatus 10 further comprises a control module 14 configured to obtain information related to a mobility of the mobile transceiver 200 and to determine information related to a predicted channel condition based on the information related to the mobility of the mobile transceiver 200.

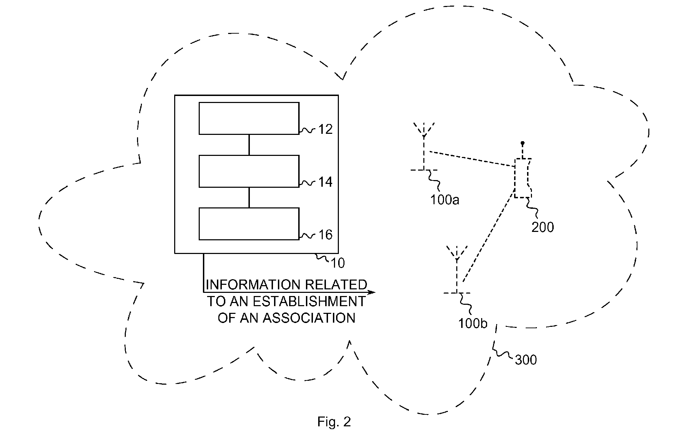

In various embodiments, the information related to the mobility may comprise information related to a position of the mobile transceiver 200. The information related to the mobility may further comprise information related to at least one element of the group of a trajectory of the mobile transceiver 200, a velocity of the mobile transceiver 200, and a cell association of the mobile transceiver 200. The information related to the predicted channel condition may be based on a Line Of Sight (LOS) of the one or more base station transceivers 100a; 100b and the position or a predicted position of the mobile transceiver 200. Alternatively or additionally, the information related to the predicted channel condition may be based on stored information related to previous channel states for a location, as will be detailed in the description for Fig. 2.

In embodiments the control module 14 may be implemented using one or more processing units, one or more processing devices, any means for processing, such as a processor, a computer or a programmable hardware component being operable with accordingly adapted software. In other words, the described function of the control module 14 may as well be implemented in software, which is then executed on one or more programmable hardware components. Such hardware components may comprise a general purpose processor, a Digital Signal Processor (DSP), a micro-controller, etc.

The control module 14 is further configured to determine the information related to the establishment of the association between the one or more base station transceivers 100a; 100b and the mobile transceiver 200 based on the information related to the predicted channel condition. The control module is further configured to provide the information related to the establishment of the association between the one or more base station transceivers 100a; 100b and the mobile transceiver 200. The at least one interface 12 is coupled to the control module 14. In various embodiments, the control module 14 may provide the information related to the establishment of the association between the one or more base station transceivers 100a; 100b to at least a subset of the one or more base station transceivers 100a; 100b and/or to the mobile transceiver 200.

In at least some embodiments, the control module 14 may be configured to determine the information related to the establishment of the association between the one or more base station transceivers 100a; 100b and the mobile transceiver 200 based on the information related to the predicted channel condition, wherein the information related to the predicted channel condition may comprise a predicted channel condition of the base station transceiver of the one or more base station transceivers 100a; 100b currently associated with the base station transceiver and predicted channel conditions of at least a subset of the one or more base station transceivers 100a; 100b. Based on the predicted channel conditions, the control module 14 may determine at least one of the one or more base station transceivers 100a; 100b to establish or prepare an establishment of a connection with the mobile transceiver 200, e.g. based on a short-term, middle-term or long-term prediction of the channel condition, e.g. to effect a reduction or avoidance of service interruptions.

In general, the mobile communication system 300 may, for example, correspond to one of the Third Generation Partnership Project (3GPP)-standardized mobile communication networks, where the term mobile communication system is used synonymously to mobile communication network. The mobile or wireless communication system may correspond to, for example, a millimeter wave-based mobile communication system, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station transceiver, e.g. a base station transceiver of the one or more base station transceivers 100a; 100b, can be operable to communicate with one or more active mobile transceivers and a base station transceiver can be located in or adjacent to a coverage area of another base station transceiver, e.g. a macro cell base station transceiver or small cell base station transceiver. Hence, embodiments may provide a mobile communication system comprising one or more mobile transceivers and one or more base station transceivers, wherein the base station transceivers may establish macro cells or small cells, as e.g. pico-, metro-, or femto cells. A mobile transceiver may correspond to a smartphone, a cell phone, user equipment, radio equipment, a mobile, a mobile station, a laptop, a notebook, a personal computer, a Personal Digital Assistant (PDA), a Universal Serial Bus (USB) -stick, a car, a mobile relay transceiver for D2D communication, etc. A mobile transceiver may also be referred to as User Equipment (UE) or mobile in line with the 3GPP terminology.

A base station transceiver can be located in the fixed or stationary part of the network or system. A base station transceiver may correspond to a remote radio head, a transmission point, an access point, radio equipment, a macro cell, a small cell, a micro cell, a femto cell, a metro cell etc. A base station transceiver may correspond to a base station understood as a logical concept of a node/entity terminating a radio bearer or connectivity over the air interface between a terminal/mobile transceiver and a radio access network. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point, a relay transceiver etc., which may be further subdivided in a remote unit and a central unit.

A mobile transceiver, e.g. the mobile transceiver 200, can be associated, camped on, or registered with a base station transceiver or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

In at least some embodiments, the control module 14 may be configured to change the association of the mobile transceiver 200 from a first base station transceiver configured to operate in the mobile communication system 300 to a second base station transceiver configured to operate in the same or another mobile communication system. In various embodiments, the control module 14 may change the association of the mobile transceiver 200 to a base station transceiver of the mobile communication system 300, the base station transceiver having advantageous properties based on the information related to the predicted channel condition, or it may change the association to a base station transceiver of a mobile communication system operating in a lower frequency band, e.g. LTE, UMTS, EDGE etc. (Inter-System HandOver, ISHO).

In various embodiments, at least one of the one or more base station transceivers 100a; 100b may be configured to operate in a millimeter wave band.

Radio conditions for mm-wave mobile communication system, e.g. the mobile communication system 300, may be challenging concerning radio signal outages, which may occur at any time, with a typically much higher probability of outages compared to lower-frequency (e.g. below 3 GHz) mobile communication systems. Accelerated handovers and/or accelerated re-establishment of the mm-wave connection in the case that the currently active radio connection should drop out may be advantageous. In this case it might no longer be possible to start a time-consuming scanning process over a range of angles, over potentially a wide range of frequencies and over a certain period of time for one scanning setting. In embodiments, the control module 14 may predict changing channel conditions as information related to the predicted channel condition, which may indicate that a drop-out event may occur. A subsequent mm-wave connection opportunity may be prepared in advance, e.g. using the information related to the establishment of the association between the one or more base station transceivers 100a; 100b and the mobile transceiver 200.

Another mm-wave base station may already direct or has already been prepared to immediately direct a new mm-wave beam toward that mobile and the mobile terminal may have received information about where to scan for new mm-wave base station discovery signals as part of the information related to the establishment of the association between the one or more base station transceivers 100a; 100b and the mobile transceiver 200. In embodiments, an accelerated procedure to handover to another mm-wave cell or to reestablish a new connection when it becomes suddenly necessary may be enabled. As outlined above, without this prediction and preparation, the mobile terminal might not discover the other mm-wave base station, as its discovery signal range is lower than the serviceable area, unless the discovery signal is emitted in the form of a directed beam. As the subsequent mm-wave base station may be outside the range of an omnidirectional discovery signal, a directed discovery-signal-beam may become necessary to bridge the distance to the mobile transceiver.

In various embodiments, the beam from at least one mm-wave base stations may be directed towards the mobile terminal and the mobile terminal may have obtained their connection information, such as frequencies, angular-direction, or timing information. A faster connection re-establishment or connection switching may be enabled. This may enable a seamless mm-wave connection, despite challenging radio conditions.

When predicting likely outages in the near future, a subsequent mm-wave connection may be prepared in time, such as e.g. exchanging the mutual information and predictively directing required antenna beams, so that soon occurring radio connection outages may be prevented and a non-interrupted seamless connection may be provided to the user while using the millimeter wave-based mobile communication system.

In various embodiments, the information related to the mobility of the mobile transceiver 200 may comprise information related to a position of the mobile transceiver 200. The control module 14 may be configured to determine the information related to the establishment of the association between the one of the one or more base station transceiver 100a; 100b and the mobile transceiver 200 based on the information related to the position of the mobile transceiver 200 and information related to a position of the one or more base station transceivers of the mobile communication system 300. The control module 14 may determine the information related to the establishment of the association between the one of the one or more base station transceiver 100a; 100b and the mobile transceiver 200 based on a distance between the mobile transceiver and the one or more base station transceivers 100a; 100b or based on a LOS of the one or more base station transceivers 100a; 100b, for example.

In 5^{th} Generation (5G) communication systems, there may be a heterogeneous existence of several technologies, and the mm-wave connectivity might not be alone. In particular due to the very challenging physical radio signal properties which may lead to a high risk of mm-wave connectivity outages, the mm-wave communication might not be well suited to provide the only communication means. Mobile terminals may be likely to have multi-technology capabilities, such as including LTE and mm-wave connections. In embodiments, such legacy and/or lower-frequency networks, such as LTE, connectivity option may be used to support and guide the mm-wave discovery problem of the mobile terminals.

Within the operator network, there may be information available about the geographical location and about the surrounding of mobile users. Such information may comprise GPS data (if available), connectivity and visibility of certain cells, Information about Antenna directions, finger-printing like localization databases etc. The mobile communication system, e.g. the mobile communication system 300, may know a (more or less precise) information related to the position of the mobile transceiver, e.g. the mobile transceiver 200, within the network.

Furthermore, the control module 14 may have knowledge about the mobile communication system 300, about the location of the one or more base station transceivers 100a; 100b, and may also utilize statistical information about previously occurring events at a certain location. For example, the control module 14 may identify information that at a certain location a certain kind of problem may occur often.

This knowledge about the user position and about the network itself may be used by a "smart network entity", e.g. the apparatus 10, to guide and support the mobile terminals and the mm-wave base stations, e.g. the base station transceivers 100a; 100b, during the discovery process.

This "smart network entity", or "smart function", which may be implemented in the apparatus 10, e.g. in software in an already existing network node, may calculate how directed mm-wave beams and the mobile antennas may be directed towards each other. Thereby the amount and accuracy of available information may determines for example how precise or how narrow the antenna beam angles shall be.

Fig. 2 illustrates a block diagram of an embodiment of the apparatus 10 further comprising a storage module 16. The storage module 16 may be configured to store the information related to the position of the one or more base station transceivers. Fig. 2 further shows the at least one interface 12 and the control module 14 comprised in the apparatus 10. The control module 14 is coupled to the at least one interface 12 and to the storage module 16. Fig. 2 further shows the mobile transceiver 200 and the one or more base station transceivers 100a; 100b. The apparatus 10 is configured to provide the information related to the establishment of the association between the one or more base station transceivers 100a; 100b and the mobile transceiver 200 in the mobile communication system 300. In at least some embodiments, the storage module 16 may comprise at least one element of the group a computer readable storage medium, such as an magnetic or optical storage medium, e.g. a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

In at least some embodiments, the control module 14 may be configured to obtain information related to a channel state between the one or more base station transceivers 100a; 100b and a plurality of mobile transceivers as information related to a previous channel state. In embodiments, the information related to a channel state may correspond to information related to a receive signal power, a Receive Signal Strength Indicator (RSSI), an RSSI region or interval, a Signal-to-Noise-Ratio (SNR), a Signal-to-Interference Ratio (SIR), or a Signal-to-Interference-and-Noise Ratio (SINR), for example. In various embodiments, the plurality of mobile transceivers may correspond to mobile transceivers previously associated with at least one of the one or more base station transceivers, e.g. within a time window, or to mobile transceivers performing systematic measurements for creating a channel state map of an area.

The control module 14 may be further configured to obtain information related to a plurality of locations of the plurality of mobile transceivers and store the information related to the previous channel state together with the information related to the plurality of locations of the plurality of mobile transceivers using the storage module 16. In various embodiments, the information related to the plurality of locations may comprise a plurality of locations, e.g. as absolute Global Positioning System (GPS) or geographic coordinates, or as relative coordinates relative to an arbitrary system.

The control module 14 may be configured to determine the information related to the predicted channel condition based on the stored information related to the previous channel state, the stored information related to the plurality of locations of the plurality of mobile transceivers and the information related to the position of the one or more base station transceivers 100a; 100b. In at least some embodiments, the control module 14 may be configured to statistically determine the information related to the predicted channel condition based on a statistical analysis of the stored information related to the previous channel state, the information related to the plurality of locations and the information related to the one or more base station transceivers 100a; 100b. The control module 14 may be configured to determine a statistical likelihood of channel drop-out of the one or more base station transceivers 100a; 100b for the position of the mobile transceiver for the information related to the predicted channel condition.

In at least some embodiments, the control module 14 may be configured to obtain information related to a service traffic behavior of the mobile transceiver 200. The control module 14 may be further configured to determine the information related to the establishment of the association between the one or more base station transceivers 100a; 100b and the mobile transceiver 200 based on the information related to the service traffic behavior. In various embodiments, the information related to the service traffic behavior may comprise information related to at least one element of the group of an average data throughput, a peak data throughput, an estimated data throughput, a remaining download size, a Quality-of-Service (QoS) indicator, and a periodicity of data transmissions.

In various embodiments, the expected or predicted user traffic behavior, or service traffic behavior, might also be considered. For example, if a mobile is currently downloading or streaming large amount of date, then it is likely that this data demand will keep on in the near future. On the other hand, an idle mode mobile transceiver might not be so likely to need high data rates in the near future. In this way, the control module 14 may decide which mobiles and which directed base station beams are informed, suggested, and/or instructed to perform certain actions.

Instead of a power-limited Omni directional or a very wide angle discovery/advertisement signal of the base station, e.g. the base station transceiver 100a, which might be detectable in the proximity of the mm-wave base station, the mm-wave base station may be instructed to point a (more or less) narrow discovery signal beam towards the relevant mobile terminals. These might be any mobile transceiver, e.g. the mobile transceiver 200, within the potential mm-wave coverage area, but the control module 14 might also select those mobiles, which require mm-connections, or which are predicted to require or benefit from an mm-wave connection in the near future.

In various embodiments, the control module 14 may be configured to determine information related to a discovery beam for at least one of the one or more base station transceivers 100a; 100b. The information related to the discovery beam may be comprised in the information related to the establishment of the association between the one or more base station transceivers 100a; 100b and the mobile transceiver 200. The information related to the discovery beam may comprise information related to a beam width and/or information related to a beam direction.

The information related to the discovery beam may further comprise at least one element of the group of:
▪ which mm-wave base stations are (or may be) in proximity to the mobile transceiver 200, e.g. the one or more base station transceivers 100a; 100b,
▪ on which mm-wave frequencies, or on which bands the base station transceivers of the one or more base station transceivers 100a; 100b may operate,
▪ in which angle of the mobile terminal the mm-beam may be located, i.e. in which orientation of the mobile terminal might scan for the discovery signal of the one or more base station transceivers 100a; 100b,
▪ particular timing information, especially if the mm-wave base station's discovery beam might not be permanently emitted towards the mobile terminal, and
▪ additional information to support the search and discovery process.

The information related to the discovery beam may accelerate a discovery of the discovery signal beam.

Embodiments may provide a more efficient and energy saving discovery procedure. The base station transceiver antenna beams, e.g. of the one or more base station transceivers 100a; 100b, may be emitted in those directions where (relevant) mobiles are located, and the mobile transceiver 200 may limit its scanning-measurements only on promising frequencies and directions. This may reduce energy consumption expended in conventional approaches for scanning and may avoid emitting energy into non-required directions.

In at least some embodiments, the control module 14 may be further configured to provide handover control information based on the information related to the predicted channel condition. The handover control information may comprise information related to instructions to establish an association between a base station transceiver and the mobile transceiver 200, and/or information related to instructions to terminate an association between a base station transceiver and the mobile transceiver 200, for example. In various embodiments, the one or more base station transceivers 100a; 100b may comprise at least two base station transceivers. The control module 14 may be configured to provide the handover control information to control an establishment of a subsequent association between one base station transceiver 100a of the one or more base station transceivers 100a; 100b and the mobile transceiver 200. The control module 14 may be configured to provide the handover control information to control a termination of a current association between another base station transceiver of the one or more base station transceivers 100a; 100b and the mobile transceiver 200 to effect a seamless transition from the current association to the subsequent association. In at least some embodiments, the control module 14 may provide the handover control information to terminate the current association when the subsequent association is established and/or when the mobile transceiver is configured to obtain payload data via the subsequent association.

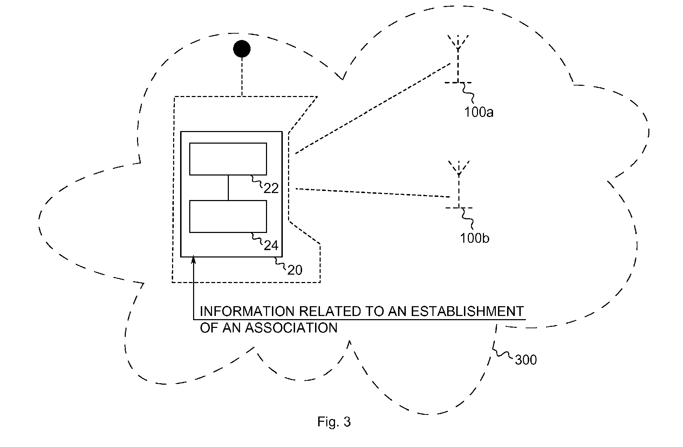

Fig. 3 illustrates a block diagram of an embodiment of an apparatus 20 for a mobile transceiver 200 in a mobile communication system 300. The mobile communication system 300 further comprises two or more base station transceivers 100a; 100b. The apparatus 20 comprises at least one transceiver module 22 to communicate with the mobile communication system 300. The at least one transceiver module 22 is configured to communicate with at least two of the two or more base station transceivers 100a; 100b at the same time. In various embodiments, the at least one transceiver module may be configured to communicate with at least two of the two or more base station transceivers 100a; 100b at the same time using the same transmission technology, e.g. based on millimeter wave connections, and/or the at least one transceiver module may be configured to communicate with at least two of the two or more base station transceivers 100a; 100b at the same time using different transmission technologies, e.g. based on millimeter wave connections and based on lower-frequency transmissions, e.g. LTE, UTMS, GSM etc.

The at least one transceiver module 22, may be implemented as any means for transceiving, i.e. receiving and/or transmitting etc., one or more transceiver units, one or more transceiver devices and it may comprise typical receiver and/or transmitter components, such as one or more elements of the group of one or more Low-Noise Amplifiers (LNAs), one or more Power Amplifiers (PAs), one or more filters or filter circuitry, one or more diplexers, one or more duplexers, one or more Analog-to-Digital converters (A/D), one or more Digital-to-Analog converters (D/A), one or more modulators or demodulators, one or more mixers, one or more antennas, etc. In at least some embodiments, the at least one transceiver module 22 may be configured to obtain and/or provide information using the mobile communication system 300, e.g. based on millimeter wave connections, based on lower-frequency connections, e.g. LTE, UMTS, GSM, and/or based on millimeter wave and lower-frequency connections.

The apparatus 20 further comprises a control module 24 to obtain information related to an establishment of an association between the one or more base station transceivers 100a; 100b and the mobile transceiver 200. The control module 24 may be further configured to establish at least one association between the mobile transceiver and at least one of the two or more base station transceivers 100a; 100b based on the information related to the establishment of the association, without performing handover measurements on radio signals of the at least one of the two or more base station transceivers 100a; 100b within a predetermined time interval prior to establishing the at least one association. In at least some embodiments, the predetermined time interval may correspond to an implicit time interval, e.g. based on a channel condition, a coherence time, or a velocity of the mobile transceiver, and may correspond to a time interval, after which previously gathered handover measurements may comprise a reduced validity and might not be used for determining a handover in conventional systems. The handover measurements may correspond to measurements of a signal strength of a base station transceiver, which may be compared with a threshold and/or a signal strength of a current association.

In various embodiments, the mobile transceiver 200 may be associated with at least one base station transceiver of the two or more base station transceivers 100a; 100b using a current association. The control module 24 may be further configured to obtain handover control information. The control module 24 may be further configured to establish a subsequent association based on the information related to the establishment of the association. The control module 24 may be further configured to maintain the current association until the subsequent association is established and to switch over to the subsequent association based on the handover control information.

More details and aspects of the apparatus 20 (mobile transceiver 200, mobile communication system 300, base station transceiver, information related to the establishment of the association between the one or more base station transceivers 100a; 100b and the mobile transceiver 200, association, handover control information) are mentioned in connection with the proposed concept or one or more examples described above (e.g. Fig. 1 and 2). The apparatus 20 may comprise one or more additional optional features corresponding to one or more aspects of the proposed concept or one or more examples described above or below.

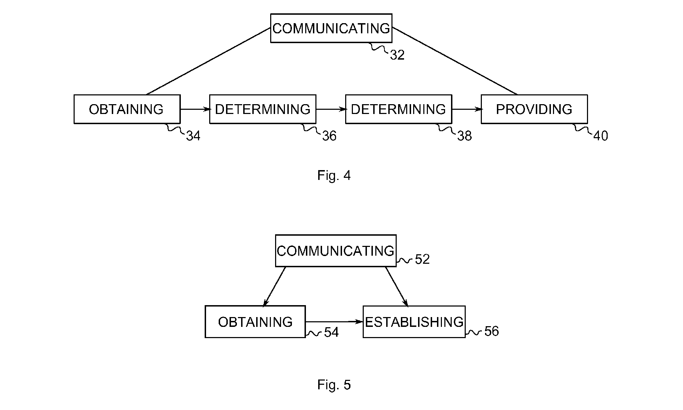

Fig. 4 illustrates a flow chart of an embodiment of a method suitable for providing information related to an establishment of an association between one or more base station transceivers 100a; 100b and a mobile transceiver 200 in a mobile communication system 300. The method comprises communicating 32 within the mobile communication system 300. The method further comprises obtaining 34 information related to a mobility of the mobile transceiver 200 and determining 36 information related to a predicted channel condition, based on the information related to the mobility of the mobile transceiver 200. The method further comprises determining 38 the information related to the establishment of the association between the one or more base station transceivers 100a; 100b and the mobile transceiver 200 based on the information related to the predicted channel condition. The method further comprises providing 40 the information related to the establishment of the association between the one or more base station transceivers 100a; 100b and the mobile transceiver 200.

Fig. 5 illustrates a flow chart of an embodiment of a method for a mobile transceiver 200 in a mobile communication system 300. The mobile communication system 300 further comprises two or more base station transceivers 100a; 100b. The method comprises communicating 52 with at least two of the two or more base station transceivers 100a; 100b at the same time. The method further comprises obtaining 54 information related to an establishment of an association between the one or more base station transceivers 100a; 100b and the mobile transceiver 200. The method further comprises establishing 56 at least one association between the mobile transceiver and at least one of the two or more base station transceivers 100a; 100b based on the information related to the establishment of the association, without performing handover measurements on radio signals of the at least one of the two or more base station transceivers 100a; 100b within a predetermined time interval prior to establishing the at least one association.

A further embodiment is a computer program product comprising a computer readable medium having computer readable program code embodied therein, the computer readable program code being configured to implement one of the above methods when being loaded on a computer, a processor, or a programmable hardware component.

Some embodiments comprise a digital control circuit installed within the apparatus for performing the method. Such a digital control circuit, e.g. a Digital Signal Processor (DSP), needs to be programmed accordingly. Hence, yet further embodiments also provide a computer program having a program code for performing embodiments of the method, when the computer program is executed on a computer, a digital processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

Embodiments may provide a basis for integrating mm-wave cells into legacy cellular communication networks while allowing mobile transceivers to discover and take opportunities of mm-wave connections. Embodiments may increase a usability of millimeter wave-based connections and may enable a seamless handover, e.g. before a connections is about to drop.

Embodiments may further consider different operators quality requirements and service classes, e.g. without having to reveal many internal operator details.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transmitting", "means for receiving", "means for transceiving", "means for processing", etc., may be provided through the use of dedicated hardware, such as "a controller", "a transmitter", "a receiver", "a transceiver", "a processor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1. An apparatus (10) suitable for providing information related to an establishment of an association between one or more base station transceivers (100a; 100b) and a mobile transceiver (200) in a mobile communication system (300), the apparatus (10) comprising
at least one interface (12) to communicate within the mobile communication system (300); and
a control module (14) to
obtain information related to a mobility of the mobile transceiver (200),
determine information related to a predicted channel condition based on the information related to the mobility of the mobile transceiver (200),
determine the information related to the establishment of the association between the one or more base station transceivers (100a; 100b) and the mobile transceiver (200) based on the information related to the predicted channel condition, and
provide the information related to the establishment of the association between the one or more base station transceivers (100a; 100b) and the mobile transceiver (200).

2. The apparatus (10) of claim 1, wherein the control module (14) is configured to change the association of the mobile transceiver (200) from a first base station transceiver configured to operate in the mobile communication system (300) to a second base station transceiver configured to operate in the same or another mobile communication system.

3. The apparatus (10) of claim 1, wherein at least one of the one or more base station transceivers (100a; 100b) is configured to operate in a millimeter wave band.

4. The apparatus (10) of claim 1, wherein the information related to the mobility of the mobile transceiver (200) comprises information related to a position of the mobile transceiver (200), and wherein the control module (14) is configured to determine the information related to the establishment of the association between the one of the one or more base station transceiver (100a; 100b) and the mobile transceiver (200) based on the information related to the position of the mobile transceiver (200) and information related to a position of the one or more base station transceivers of the mobile communication system (300).

5. The apparatus (10) of claim 4, wherein the information related to the mobility further comprises information related to at least one element of the group of a trajectory of the mobile transceiver (200), a velocity of the mobile transceiver (200), and a cell association of the mobile transceiver (200).

6. The apparatus (10) of claim 4 further comprising a storage module (16), wherein the storage module (16) is configured to store the information related to the position of the one or more base station transceivers.

7. The apparatus (10) of claim 6, wherein the control module (14) is configured to:
• obtain information related to a channel state between the one or more base station transceivers (100a; 100b) and a plurality of mobile transceivers as information related to a previous channel state;
• obtain information related to a plurality of locations of the plurality of mobile transceivers; and
• store the information related to the previous channel state together with the information related to the plurality of locations of the plurality of mobile transceivers using the storage module (16),
wherein the control module (14) is configured to determine the information related to the predicted channel condition based on the stored information related to the previous channel state, the stored information related to the plurality of locations of the plurality of mobile transceivers and the information related to the position of the one or more base station transceivers (100a; 100b).

8. The apparatus (10) of claim 1, wherein the control module (14) is configured to obtain information related to a service traffic behavior of the mobile transceiver (200), and wherein the control module (14) is further configured to determine the information related to the establishment of the association between the one or more base station transceivers (100a; 100b) and the mobile transceiver (200) based on the information related to the service traffic behavior.

9. The apparatus (10) of claim 1, wherein the control module (14) is configured to determine information related to a discovery beam for at least one of the one or more base station transceivers (100a; 100b), wherein the information related to the discovery beam is comprised in the information related to the establishment of the association between the one or more base station transceivers (100a; 100b) and the mobile transceiver (200), and wherein the information related to the discovery beam comprises information related to a beam width and/or information related to a beam direction.

10. The apparatus (10) of claim 1, wherein the control module (14) is further configured to provide handover control information based on the information related to the predicted channel condition.

11. An apparatus (20) for a mobile transceiver (200) in a mobile communication system (300), the mobile communication system (300) further comprising two or more base station transceivers (100a; 100b), the apparatus (20) comprising
at least one transceiver module (22) to communicate with the mobile communication system (300), wherein the at least one transceiver module (22) is configured to communicate with at least two of the two or more base station transceivers (100a; 100b) at the same time; and
a control module (24) to
obtain information related to an establishment of an association between the one or more base station transceivers (100a; 100b) and the mobile transceiver (200), and establish at least one association between the mobile transceiver and at least one of the two or more base station transceivers (100a; 100b) based on the information related to the establishment of the association, without performing handover measurements on radio signals of the at least one of the two or more base station transceivers (100a; 100b) within a predetermined time interval prior to establishing the at least one association.

12. The apparatus (20) of claim 11, wherein the mobile transceiver (200) is associated with at least one base station transceiver of the two or more base station transceivers (100a; 100b) using a current association, wherein the control module (24) is further configured to obtain handover control information, wherein the control module (24) is further configured to establish a subsequent association based on the information related to the establishment of the association, and wherein the control module (24) is further configured to maintain the current association until the subsequent association is established and to switch over to the subsequent association based on the handover control information.

13. A method suitable for providing information related to an establishment of an association between one or more base station transceivers (100a; 100b) and a mobile transceiver (200) in a mobile communication system (300), the method comprising
communicating (32) within the mobile communication system (300),
obtaining (34) information related to a mobility of the mobile transceiver (200),
determining (36) information related to a predicted channel condition, based on the information related to the mobility of the mobile transceiver (200),
determining (38) the information related to the establishment of the association between the one or more base station transceivers (100a; 100b) and the mobile transceiver (200) based on the information related to the predicted channel condition, and
providing (40) the information related to the establishment of the association between the one or more base station transceivers (100a; 100b) and the mobile transceiver (200).

14. A method for a mobile transceiver (200) in a mobile communication system (300), the mobile communication system (300) further comprising two or more base station transceivers (100a; 100b), the method comprising
communicating (52) with at least two of the two or more base station transceivers (100a; 100b) at the same time,
obtaining (54) information related to an establishment of an association between the one or more base station transceivers (100a; 100b) and the mobile transceiver (200), and
establishing (56) at least one association between the mobile transceiver and at least one of the two or more base station transceivers (100a; 100b) based on the information related to the establishment of the association, without performing handover measurements on radio signals of the at least one of the two or more base station transceivers (100a; 100b) within a predetermined time interval prior to establishing the at least one association.

15. A computer program product comprising a computer readable medium having computer readable program code embodied therein, the computer readable program code being configured to implement any of the methods of claim 13 and 14, when being loaded on a computer, a processor, or a programmable hardware component.

## Amended claims

### Amended claims in accordance with Rule 137(2) EPC.

1. An apparatus (10) suitable for providing information related to an establishment of an association between one or more base station transceivers (100a; 100b) and a mobile transceiver (200) in a mobile communication system (300), the apparatus (10) comprising
at least one interface (12) to communicate within the mobile communication system (300); and
a control module (14) to
obtain information related to a mobility of the mobile transceiver (200),
determine information related to a predicted channel condition based on the information related to the mobility of the mobile transceiver (200) and based on a line of sight between the one or more base station transceivers (100a; 100b) and a position or a predicted position of the mobile transceiver (200),
determine the information related to the establishment of the association between the one or more base station transceivers (100a; 100b) and the mobile transceiver (200) based on the information related to the predicted channel condition, and
provide the information related to the establishment of the association between the one or more base station transceivers (100a; 100b) and the mobile transceiver (200).

2. The apparatus (10) of claim 1, wherein the control module (14) is configured to change the association of the mobile transceiver (200) from a first base station transceiver configured to operate in the mobile communication system (300) to a second base station transceiver configured to operate in the same or another mobile communication system.

3. The apparatus (10) of claim 1, wherein at least one of the one or more base station transceivers (100a; 100b) is configured to operate in a millimeter wave band.

4. The apparatus (10) of claim 1, wherein the information related to the mobility of the mobile transceiver (200) comprises information related to a position of the mobile transceiver (200), and wherein the control module (14) is configured to determine the information related to the establishment of the association between the one of the one or more base station transceiver (100a; 100b) and the mobile transceiver (200) based on the information related to the position of the mobile transceiver (200) and information related to a position of the one or more base station transceivers of the mobile communication system (300).

5. The apparatus (10) of claim 4, wherein the information related to the mobility further comprises information related to at least one element of the group of a trajectory of the mobile transceiver (200), a velocity of the mobile transceiver (200), and a cell association of the mobile transceiver (200).

6. The apparatus (10) of claim 4 further comprising a storage module (16), wherein the storage module (16) is configured to store the information related to the position of the one or more base station transceivers.

7. The apparatus (10) of claim 6, wherein the control module (14) is configured to:
• obtain information related to a channel state between the one or more base station transceivers (100a; 100b) and a plurality of mobile transceivers as information related to a previous channel state;
• obtain information related to a plurality of locations of the plurality of mobile transceivers; and
• store the information related to the previous channel state together with the information related to the plurality of locations of the plurality of mobile transceivers using the storage module (16),
wherein the control module (14) is configured to determine the information related to the predicted channel condition based on the stored information related to the previous channel state, the stored information related to the plurality of locations of the plurality of mobile transceivers and the information related to the position of the one or more base station transceivers (100a; 100b).

8. The apparatus (10) of claim 1, wherein the control module (14) is configured to obtain information related to a service traffic behavior of the mobile transceiver (200), wherein the information related to the service traffic behavior comprises information related to at least one element of the group of an average data throughput, a peak data throughput, an estimated data throughput, a remaining download size, a Quality-of-Service (QoS) indicator, and a periodicity of data transmissions, and wherein the control module (14) is further configured to determine the information related to the establishment of the association between the one or more base station transceivers (100a; 100b) and the mobile transceiver (200) based on the information related to the service traffic behavior.

9. The apparatus (10) of claim 1, wherein the control module (14) is configured to determine information related to a discovery beam for at least one of the one or more base station transceivers (100a; 100b), wherein the information related to the discovery beam is comprised in the information related to the establishment of the association between the one or more base station transceivers (100a; 100b) and the mobile transceiver (200), and wherein the information related to the discovery beam comprises information related to a beam width and/or information related to a beam direction.

10. The apparatus (10) of claim 1, wherein the control module (14) is further configured to provide handover control information based on the information related to the predicted channel condition.

11. An apparatus (20) for a mobile transceiver (200) in a mobile communication system (300), the mobile communication system (300) further comprising two or more base station transceivers (100a; 100b), the apparatus (20) comprising
at least one transceiver module (22) to communicate with the mobile communication system (300), wherein the at least one transceiver module (22) is configured to communicate with at least two of the two or more base station transceivers (100a; 100b) at the same time; and
a control module (24) to
obtain information related to an establishment of an association between the one or more base station transceivers (100a; 100b) and the mobile transceiver (200), and
establish at least one association between the mobile transceiver and at least one of the two or more base station transceivers (100a; 100b) based on the information related to the establishment of the association, without performing handover measurements on radio signals of the at least one of the two or more base station transceivers (100a; 100b) within a predetermined time interval prior to establishing the at least one association.

12. The apparatus (20) of claim 11, wherein the mobile transceiver (200) is associated with at least one base station transceiver of the two or more base station transceivers (100a; 100b) using a current association, wherein the control module (24) is further configured to obtain handover control information, wherein the control module (24) is further configured to establish a subsequent association based on the information related to the establishment of the association, and wherein the control module (24) is further configured to maintain the current association until the subsequent association is established and to switch over to the subsequent association based on the handover control information.

13. A method suitable for providing information related to an establishment of an association between one or more base station transceivers (100a; 100b) and a mobile transceiver (200) in a mobile communication system (300), the method comprising
communicating (32) within the mobile communication system (300),
obtaining (34) information related to a mobility of the mobile transceiver (200), determining (36) information related to a predicted channel condition, based on the information related to the mobility of the mobile transceiver (200) and based on a line of sight between the one or more base station transceivers (100a; 100b) and a position or a predicted position of the mobile transceiver (200),
determining (38) the information related to the establishment of the association between the one or more base station transceivers (100a; 100b) and the mobile transceiver (200) based on the information related to the predicted channel condition, and
providing (40) the information related to the establishment of the association between the one or more base station transceivers (100a; 100b) and the mobile transceiver (200).

14. A method for a mobile transceiver (200) in a mobile communication system (300), the mobile communication system (300) further comprising two or more base station transceivers (100a; 100b), the method comprising
communicating (52) with at least two of the two or more base station transceivers (100a; 100b) at the same time,
obtaining (54) information related to an establishment of an association between the one or more base station transceivers (100a; 100b) and the mobile transceiver (200), and establishing (56) at least one association between the mobile transceiver and at least one of the two or more base station transceivers (100a; 100b) based on the information related to the establishment of the association, without performing handover measurements on radio signals of the at least one of the two or more base station transceivers (100a; 100b) within a predetermined time interval prior to establishing the at least one association.

15. A computer program product comprising a computer readable medium having computer readable program code embodied therein, the computer readable program code being configured to implement any of the methods of claim 13 and 14, when being loaded on a computer, a processor, or a programmable hardware component.
